# EUROPÄISCHE PATENTSCHRIFT

(11) **EP 3 106 943 B1**
(45) Veröffentlichungstag und Bekanntmachung des Hinweises auf die Patenterteilung: **26.06.2019**
(21) Anmeldenummer: 16174293.7
(22) Anmeldetag: 14.06.2016
(51) Int. Cl.: G05B 19/19, B23K 26/08, G02B 26/10, B23K 26/082

(54) **SCANNEREINRICHTUNG FÜR EINEN LASERSTRAHL ZUR LASERMATERIALBEARBEITUNG, WERKZEUGMASCHINE MIT DER SCANNEREINRICHTUNG SOWIE VERFAHREN ZUM ANSTEUERN DER WERKZEUGMASCHINE MIT DER SCANNEREINRICHTUNG**
SCANNER DEVICE FOR A LASER BEAM FOR LASER MATERIAL MACHINING, MACHINE TOOL WITH THE SCANNER DEVICE AND METHOD FOR CONTROLLING THE MACHINE TOOL WITH THE SCANNER DEVICE
DISPOSITIF DE SCANNER POUR UN RAYONNEMENT LASER DESTINE AU TRAITEMENT PAR LASER DE MATERIAU, MACHINE-OUTIL COMPRENANT UN DISPOSITIF DE SCANNER ET PROCEDE DE COMMANDE DE LA MACHINE-OUTIL COMPRENANT LE DISPOSITIF DE SCANNER

(30) Priorität: 16.06.2015 DE 102015109593
(43) Veröffentlichungstag der Anmeldung: 21.12.2016
(73) Patentinhaber: Erlas Erlanger Lasertechnik GmbH, 91056 Erlangen (DE)
(72) Erfinder: Hoffmann, Peter, 90525 Nürnberg (DE)
(74) Vertreter: Negendanck, Matthias

(56) Entgegenhaltungen:
- EP-A1- 1 424 613
- DE-A1-102007 052 999

## Beschreibung

Die Erfindung betrifft eine Scannereinrichtung für einen Laserstrahl zur Lasermaterialverarbeitung mit einem ersten Spiegelmodul, wobei das erste Spiegelmodul einen ersten Spiegel und eine erste Spiegelaktorik zum Schwenken des ersten Spiegels relativ zu einer ersten Spiegelschwenkachse um einen ersten Spiegelschwenkwinkel aufweist, mit einem zweiten Spiegelmodul, wobei das zweite Spiegelmodul einen zweiten Spiegel und eine zweite Spiegelaktorik zum Schwenken des zweiten Spiegels relativ zu einer zweiten Spiegelschwenkachse um einen zweiten Spiegelschwenkwinkel aufweist, und wobei der erste und der zweite Spiegel eine Strahlführung für den Laserstrahl bilden, so dass der Laserstrahl durch Veränderung des ersten und des zweiten Schwenkwinkels in zwei unabhängige Raumrichtungen abgelenkt werden kann, mit einem Kontrollmodul zur Vorgabe eines ersten SOLL-Spiegelschwenkwinkels und eines zweiten SOLL-Spiegelschwenkwinkels. Die Erfindung betrifft ferner eine Werkzeugmaschine mit dieser Scannereinrichtung sowie ein Verfahren zum Betreiben der Scannereinrichtung.

Scanner für Laserstrahlen in der Lasermaterialbearbeitung weisen in den bekannten Ausführungsformen zwei Spiegel auf, welche üblicherweise mittels eines Galvanometerantriebs jeweils um eine Schwenkachse geschwenkt werden können. Mit diesem optischen Aufbau ist es möglich, einen Laserstrahl auf einem Werkstück in zwei unabhängigen Raumrichtungen zu verfahren.

Derartige Laserscanner werden auch als Werkzeuge in Werkzeugmaschinen eingesetzt, sodass eine Verfahrbewegung des Laserstrahls auf dem Werkstück mit den mechanischen Achsen der Werkzeugmaschine und redundant hierzu mittels der Galvanometerantriebe erfolgen kann.

Aus der EP 1 424 613 A1 ist ein Verfahren zum Bearbeiten von Werkstücken mittels eines mehrachsigen Handhabungsgeräts, wie eines Industrieroboters, mit einem nach Maßgabe durch eine Steuerungseinheit des Handhabungsgeräts bewegten Werkzeug, das Eigenbewegungen mit mehreren Freiheitsgraden ausführen kann, bekannt. Das Verfahren zeichnet sich dadurch aus, dass die Freiheitsgrade des Werkzeugs gemeinsam mit Freiheitsgraden von Achsen des Handhabungsgeräts in Echtzeit zum Bewegen einer Werkzeugspitze (TCP) gemäß einer vorbestimmten zusammenhängenden Bearbeitungsbahn oder einer stückweise zusammenhängenden Bearbeitungsgeometrie (Sprungfunktion) und zur Bestimmung einer Bewegung des Handhabungsgeräts ausgewertet werden. Weiterhin schlägt die EP 1 424 613 A1 eine zum Durchführen des vorstehend genannten Verfahrens geeignete Vorrichtung vor, bei der das Werkzeug und eine Werkzeugspitze bei der Bearbeitung des Werkstücks in ihren Bewegungen durch die Steuerungseinheit des Handhabungsgeräts steuerbar sind. Auf diese Weise lässt sich eine Gesamtbearbeitungszeit drastisch senken.

Es ist Aufgabe der vorliegenden Erfindung, eine Scannereinrichtung für einen Laserstrahl zur Lasermaterialbearbeitung vorzuschlagen, welche eine vereinfachte Integration in eine Werkzeugmaschine ermöglicht.

Diese Aufgabe wird durch eine Scannereinrichtung mit den Merkmalen des Anspruchs 1, durch eine Werkzeugmaschine mit den Merkmalen des Anspruchs 8 und ein Verfahren mit den Merkmalen des Anspruchs 10 gelöst. Bevorzugte oder vorteilhafte Ausführungsformen der Erfindung ergeben sich aus den Unteransprüchen, der nachfolgenden Beschreibung sowie den beigefügten Figuren.

Gegenstand der Erfindung ist eine Scannereinrichtung, welche für einen Laserstrahl zur Lasermaterialbearbeitung geeignet und/oder ausgebildet ist. Vorzugsweise weist der Laserstrahl eine Dauerleistung von mehr als 500 Watt, insbesondere von mehr als 1000 Watt auf. Bei der Lasermaterialbearbeitung kann es sich insbesondere um ein Schweißen, Härten, Aufschmelzen oder Löten, insbesondere von metallischen Werkstoffen, handeln. Vorzugsweise ist die Scannereinrichtung zur Integration in eine Werkzeugmaschine als eine Werkzeugeinrichtung ausgebildet, insbesondere derart, dass die Scannereinrichtung durch die Werkzeugmaschine manipuliert und/oder bewegt wird.

Die Scannereinrichtung ist mindestens oder genau als eine 2D-Scannereinrichtung ausgebildet, optional kann diese auch als eine 3D-Scannereinrichtung realisiert sein. Insbesondere kann die Scannereinrichtung den Laserstrahl, insbesondere einen Laserfokus des Laserstrahls in zwei unabhängigen Raumrichtungen auf einer Bearbeitungsebene verfahren.

Die Scannereinrichtung weist ein erstes Spiegelmodul und ein zweites Spiegelmodul auf. Das erste Spiegelmodul umfasst einen ersten Spiegel, welcher zur Reflexion des Laserstrahls ausgebildet ist. Ferner weist das erste Spiegelmodul eine Spiegelaktorik zum Schwenken des ersten Spiegels relativ zu einer ersten, insbesondere um eine erste Spiegelschwenkachse auf. Der Schwenkwinkel um die erste Spiegelschwenkachse wird als erster Spiegelschwenkwinkel bezeichnet. Das zweite Spiegelmodul weist einen zweiten Spiegel auf, welcher ebenfalls für den Laserstrahl geeignet und/oder ausgebildet ist. Der zweite Spiegel kann mittels einer zweiten Spiegelaktorik relativ zu, insbesondere um, eine zweite Spiegelschwenkachse geschwenkt werden. Der Schwenkwinkel um die zweite Spiegelschwenkachse wird als zweiter Spiegelschwenkwinkel bezeichnet. Es kann vorgesehen sein, dass die erste Spiegelschwenkachse beabstandet zu dem ersten Spiegel, insbesondere zu einer ersten Spiegelfläche des ersten Spiegels, und/oder die zweite Spiegelschwenkachse beabstandet zu dem zweiten Spiegel, insbesondere zu einer zweiten Spiegelfläche des zweiten Spiegels, angeordnet ist oder, dass die Spiegelschwenkachsen in der Eben der jeweiligen Spiegelfläche liegen. Der erste und der zweite Spiegel können insbesondere unabhängig voneinander geschwenkt werden. Besonders bevorzugt sind der erste Spiegel und der zweite Spiegel als Planspiegel ausgebildet.

Der erste und der zweite Spiegel bilden eine Strahlführung für den Laserstrahl, sodass der Laserstrahl durch Veränderung des ersten und des zweiten Spiegelschwenkwinkels in die zwei unabhängigen Raumrichtungen abgelenkt werden kann.

Die erste und die zweite Spiegelaktorik sind vorzugsweise als Elektromotoren, insbesondere als Servomotoren ausgebildet. In dieser Ausgestaltung können Winkelpositionen für die Spiegel reproduzierbar und genau eingestellt werden.

Die Scannereinrichtung weist ferner ein Kontrollmodul zur Vorgabe eines ersten SOLL-Spiegelschwenkwinkels und eines zweiten SOLL-Spiegelschwenkwinkels auf. Das Kontrollmodul ist beispielsweise als eine digitale Datenverarbeitungseinrichtung, wie zum Beispiel eine CPU, ein Mikrocontroller, etc. ausgebildet. Das Kontrollmodul kann als eine Komponente ausgebildet sein, die in einem Gehäuse der Scannereinrichtung integriert ist. Alternativ kann das Kontrollmodul auch separat zu dem Gehäuse angeordnet sein. Das Kontrollmodul kann auch als eine Softwarekomponente auf einer anderen digitalen Datenverarbeitungseinrichtung ausgebildet sein. Insbesondere kann das Kontrollmodul als eine Softwarekomponente in einer Steuereinrichtung der Werkzeugmaschine ausgebildet sein.

Es kann vorgesehen sein, dass der erste und der zweite SOLL-Spiegelschwenkwinkel als Stellsignale unmittelbar an das erste und zweite Spiegelmodul weitergegeben werden, so dass die Spiegelmodule gesteuert werden. Alternativ kann vorgesehen sein, dass der erste und zweite SOLL-Spiegelschwenkwinkel in einen Lageregelkreis der Spiegelmodule als SOLL-Werte eingespeist wird.

Im Rahmen der Erfindung wird vorgeschlagen, dass die Scannereinrichtung eine Schnittstelle zur Übernahme von SOLL-Daten aufweist. Die Schnittstelle kann als eine kabelgebundene oder kabellose oder als eine logische Schnittstelle ausgebildet sein. Insbesondere ist die Schnittstelle als eine datenübertragende Schnittstelle ausgebildet.

Die SOLL-Daten umfassen einen ersten SOLL-Achsschwenkwinkel für eine erste virtuelle Schwenkachse und einen zweiten SOLL-Achsschwenkwinkel für eine zweite virtuelle Schwenkachse eines virtuellen Werkzeugs. Das virtuelle Werkzeug kann somit um die erste und die zweite virtuelle Schwenkachse geschwenkt werden. Die erste und die zweite virtuelle Schwenkachse kreuzen sich in einem virtuellen Schwenkpunkt, wobei das virtuelle Werkzeug auf oder an dem virtuellen Schwenkpunkt sitzt. Ausgehend von dem virtuellen Schwenkpunkt weist das virtuelle Werkzeug eine Werkzeuglänge auf. Durch die SOLL-Daten und das virtuelle Werkzeug wird ein SOLL-Bearbeitungspunkt, insbesondere ein SOLL-Tool-Center-Point definiert. Insbesondere wird der SOLL-Bearbeitungspunkt durch eine Werkzeugspitze definiert, welche von dem virtuellen Schwerpunkt um die Werkzeuglänge entfernt ist. Das virtuelle Werkzeug ist insbesondere in dem virtuellen Schwenkpunkt kardanisch aufgehängt oder gelagert. Somit kann das virtuelle Werkzeug und/oder der SOLL-Bearbeitungspunkt durch Änderung des ersten SOLL-Achsschwenkwinkels in eine erste Richtung und durch Änderung des zweiten SOLL-Achsschwenkwinkels in eine zweite, dazu senkrecht ausgerichtete Richtung ausgelenkt werden.

Das Kontrollmodul ist programmtechnisch und/oder schaltungstechnisch ausgebildet, aus den SOLL-Daten, insbesondere aus dem ersten SOLL-Achsschwenkwinkel und dem zweiten SOLL-Achsschwenkwinkel, den ersten und den zweiten SOLL-Spiegelschwenkwinkel derart zu bestimmen, dass der Laserstrahl, insbesondere als reales Werkzeug, auf den SOLL-Bearbeitungspunkt geführt wird.

Es ist insbesondere vorgesehen, dass der Laserstrahl als reales Werkzeug und das virtuelle Werkzeug auf den gleichen SOLL-Bearbeitungspunkt gerichtet sind, jedoch zumindest in einigen Betriebszuständen einen unterschiedlichen Einstrahlwinkel und/oder einen Zwischenwinkel ungleich 0 Grad zueinander einnehmen.

Es ist dabei eine Überlegung der Erfindung, dass die Integration von Laserscannern in Werkzeugmaschinen aufgrund der Tatsache, dass Werkzeugmaschinen meist über eine gekapselte Steuerung verfügen, bislang nur ungenügend zu realisieren war. So sind die üblichen Steuerungen von Werkzeugmaschinen ausgelegt, einen Bahnverlauf einer Werkzeugspitze auf einem Werkstück durch Interpolation von einer Mehrzahl von Achsen durchzuführen, wobei die Achsen in einer linearen kinematischen Kette angeordnet sind und zudem meist als kartesische Linearachsen oder Drehachsen ausgebildet sind. Damit ist es vergleichsweise einfach, eine Bahnplanung mit einer Werkzeugmaschine für ein Werkzeug durchzuführen, welches eine definierte Länge hat. Dieses Werkzeug kann um die zwei Schwenkachsen geschwenkt werden, wobei sich die zwei Schwenkachsen in einem gemeinsamen Schwenkpunkt treffen. Anders ausgedrückt sind die Schwenkachsen des Werkzeugs kardanisch zueinander angeordnet.

Bei einem Laserscanner sind jedoch die zwei Spiegel in der Laserstrahlführung hintereinander und dadurch räumlich versetzt zueinander angeordnet. Der Laserscanner weist damit ebenfalls zwei Schwenkachsen auf, die jedoch nicht kardanisch angeordnet sind. Damit ist eine steuerungstechnische Integration des Laserscanners durch eine Weitergabe von SOLL-Achsschwenkwinkeln der Werkzeugmaschine an die Schwenkachsen des Laserscanners nicht möglich, da der Laserstrahl nicht zum gewünschten SOLL-Bearbeitungspunkt geführt würde. Die reale Kinematik der Laserscanner entspricht nicht der Kinematik, die von der Werkzeugmaschine vorausgesetzt wird. Aus diesem Grund werden Laserscanner und Werkzeugmaschinen bislang steuerungstechnisch betrachtet meist unabhängig voneinander, jedoch synchronisiert zueinander angesteuert. Es findet bei diesen Ausführungen keine Mehrachsinterpolation statt, wobei bei der Mehrachsinterpolation mindestens die Schwenkachsen des Laserscanners und zudem mindestens eine, einige oder alle Achsen der Werkzeugmaschine in einer gemeinsamen Interpolation verrechnet werden.

Demgegenüber schlägt die Erfindung eine Laserscannereinrichtung vor, die eine steuerungstechnische Integration der Scannereinrichtung in die Steuerung, insbesondere in die Bahnsteuerung, der Werkzeugmaschine ermöglicht. Zur Umsetzung der steuerungstechnischen Integration weist die erfindungsgemäße Scannereinrichtung eine Schnittstelle auf, über die SOLL-Daten übergeben werden können. Die SOLL-Daten sind die Daten, welche die Steuerungseinrichtung der Werkzeugmaschine an die zwei, insbesondere kardanisch zueinander angeordneten, virtuellen Schwenkachsen übergibt, um das virtuelles Werkzeug zu manipulieren. Würden somit die zwei virtuellen Schwenkachsen auf die gemäß den SOLL-Daten vorgegebenen ersten und zweiten SOLL-Achsschwenkwinkel eingestellt werden, so würde das virtuelle Werkzeug mit seiner Werkzeugspitze auf den SOLL-Bearbeitungspunkt ausgerichtet sein. Das virtuelle Werkzeug kann in einer möglichen, vereinfachten Darstellung als Stab mit einer Werkzeugspitze ausgebildet sein, wobei das eine Ende des Stabs an dem virtuellen Schwenkpunkt positioniert ist und das andere Ende die Werkzeugspitze bildet. Die Werkzeuglänge ist der Abstand zwischen der Werkzeugspitze und dem virtuellen Schwenkpunkt.

Das Kontrollmodul ist steuerungstechnisch und/oder programmtechnisch ausgelegt, aus den bereitgestellten SOLL-Daten, den ersten und den zweiten SOLL-Spiegelschwenkwinkel zu bestimmen, sodass der Laserstrahl als das reale Werkzeug auf den SOLL-Bearbeitungspunkt geführt wird. Somit greift die Scannereinrichtung an einer offenen Übergabeschnittstelle der Steuereinrichtung für die Werkzeugmaschine an, nämlich bei der Übergabe der SOLL-Daten. Die frei zugänglichen SOLL-Daten werden dann in den ersten und den zweiten SOLL-Spiegelschwenkwinkel transformiert, sodass der Laserstrahl auf den SOLL-Bearbeitungspunkt geführt wird. Damit ist es möglich, die Scannereinrichtung als eine Werkzeugeinrichtung auf der Werkzeugmaschine zu montieren und steuerungstechnisch zu integrieren, wobei die Scannereinrichtung die Aufgabe oder Funktion eines Werkzeugs mit zwei Spiegelschwenkachsen übernimmt. Insbesondere wird die Scannereinrichtung in die Bahnplanung der Steuereinrichtung der Werkzeugmaschine in der Mehrachsinterpolation integriert.

Bei einer bevorzugten Ausgestaltung der Erfindung ist die Schnittstelle zur Übernahme der SOLL-Daten und/oder des ersten und des zweiten SOLL-Achsschwenkwinkels in Echtzeit und/oder in einem Lageregeltakt und/oder in einem Interpolationstakt ausgebildet. Der Lageregeltakt und/oder Interpolationstakt wird von der Steuereinrichtung der Werkzeugmaschine vorgegeben. In dem Interpolationstakt werden SOLL-Vorgaben für alle an der Mehrachsinterpolation beteiligten Achsen vorgegeben. Alternativ oder ergänzend kann die Schnittstelle zur Übernahme der SOLL-Daten in Echtzeit ausgebildet sein, wobei die Echtzeit so definiert ist, dass die SOLL-Daten derart schnell übernommen werden, sodass die Scannereinrichtung in einem Interpolationsbetrieb mit den Achsen der Werkzeugmaschine betrieben werden kann. Alternativ oder ergänzend ist das Kontrollmodul zur Ausgabe des ersten und des zweiten SOLL-Spiegelschwenkwinkels in Echtzeit und/oder in dem Lageregeltakt und/oder in dem Interpolationsregeltakt ausgebildet.

Durch diese Ausgestaltung wird nochmals unterstrichen, dass die Scannereinrichtung ausgebildet ist, steuerungstechnisch in die Steuereinrichtung der Werkzeugmaschine als weitere Achsen in einer Mehrachsinterpolation zusammen mit Achsen der Werkzeugmaschine integriert zu werden.

Bei einer vorteilhaften Ausgestaltung der Erfindung sind die erste und die zweite Spiegelschwenkachse der Scannereinrichtung in einer Projektionsebene senkrecht zueinander angeordnet. Die Projektionsebene ist parallel zu der ersten und senkrecht zu der zweiten Spiegelschwenkachse angeordnet. Insbesondere schneiden sich die erste und die zweite Spiegelschwenkachse nicht. Ferner ist die Strahlführung so ausgeführt, dass der auf den ersten Spiegel einfallende Laserstrahl parallel zu der zweiten Spiegelschwenkachse ausgerichtet ist. Der optische Aufbau der Scannereinrichtung führt zu deutlichen Vereinfachungen bei der Berechnung der SOLL-Spiegelschwenkwinkel.

Bei einer bevorzugten Weiterbildung der Erfindung weist die Scannereinrichtung ein Optikmodul zur Fokuslagenänderung des Laserstrahls auf, wobei das Kontrollmodul zur Vorgabe einer SOLL-Fokuslage ausgebildet ist. Ferner ist das Kontrollmodul ausgebildet, aus den SOLL-Daten die SOLL-Fokuslage zu bestimmen. Die Scannereinrichtung mit den zwei Spiegelmodulen hat die Eigenschaft, dass der Laserstrahl so abgelenkt wird, dass dessen Fokus nicht in einer gemeinsamen Ebene, sondern in einer gegebenenfalls mehrfach gekrümmten Fläche geführt ist. Dies ist insbesondere der Fall, wenn - wie es bevorzugt ist - die Scannereinrichtung nicht über eine fokuslagenkompensierende F-THETA-Linse verfügt. Insbesondere sind die Spiegel als Planspiegel ausgebildet und es ist nach den Spiegeln kein strahlformendes Element angeordnet. Die SOLL-Fokuslage wird von dem Kontrollmodul so bestimmt, dass der Fokus des Laserstrahls an dem SOLL-Bearbeitungspunkt liegt.

Prinzipiell können bei der Berechnung der SOLL-Fokuslage zwei Betriebsarten unterschieden werden:
Eine erste Betriebsart verwendet eine konstante Werkzeuglänge für das virtuelle Werkzeug. Eine konstante Werkzeuglänge kann z.B. in der Werkzeugmaschine festgelegt werden und über die Schnittstelle, über eine andere Schnittstelle oder alternativ manuell in die Scannereinrichtung, insbesondere in das Kontrollmodul der Scannereinrichtung, eingegeben werden. In dieser Betriebsart bestimmt das Kontrollmodul neben dem ersten und dem zweiten SOLL-Spiegelschwenkwinkel auch die SOLL-Fokuslage und übergibt diese an das Optikmodul, sodass die Fokuslage des Laserstrahls der konstanten Werkzeuglänge entspricht. Vorzugsweise wird die SOLL-Fokuslage in der gleichen Frequenz, insbesondere in dem gleichen Interpolationstakt und/oder Lageregeltakt wie der erste und/oder der zweite SOLL-Spiegelschwenkwinkel bestimmt.

In einer zweiten Betriebsart umfassen die SOLL-Daten eine SOLL-Werkzeuglänge. Die SOLL-Werkzeuglänge wird von dem Kontrollmodul zur Bestimmung der SOLL-Fokuslage verwendet, so dass eine Änderung der SOLL-Werkzeuglänge zu einer Änderung der SOLL-Fokuslage führt. Damit kann die Scannereinrichtung über das Optikmodul eine Linearachse entlang der Ausrichtung des virtuellen Werkzeugs umsetzen. Die SOLL-Werkzeuglänge als Teil der SOLL-Daten kann bevorzugt in Echtzeit und/oder in dem Interpolationstakt und/oder in dem Lageregeltakt übernommen werden.

Es ist vorgesehen, dass die Spiegel als Planspiegel ausgebildet sind und nach dem ersten Spiegel kein optisches Element mit einer sphärischen Brechung in der Strahlführung angeordnet ist. Optional ergänzend ist jedoch nach dem zweiten Spiegel ein Schutzglas angeordnet, welches insbesondere als eine plane Scheibe ausgebildet ist.

Bei einer möglichen Ausgestaltung der Erfindung ist das Kontrollmodul ausgebildet, die SOLL-Spiegelschwenkwinkel und optional ergänzend die SOLL-Fokuslage aus einem Datenspeicher, wie zum Beispiel einer Tabelle, einer Datenbank, etc. zu bestimmen. Diese Ausgestaltung ist prinzipiell umsetzbar, hat jedoch den Nachteil, dass eine Vielzahl von Daten oder Datenfeldern in den Datenspeicher eingelesen werden müssen. Somit stellt diese Alternative eine umsetzbare, jedoch nicht optimale Möglichkeit dar.

Bei einer besonders bevorzugten Ausgestaltung der Erfindung ist dagegen vorgesehen, dass das Kontrollmodul ausgebildet ist, die SOLL-Spiegelschwenkwinkel und optional ergänzend die SOLL-Fokuslage zu berechnen. Somit werden für jeden Satz SOLL-Daten die SOLL-Spiegelschwenkwinkel und optional ergänzend die SOLL-Fokuslage neu berechnet. Die Berechnung erfolgt in Echtzeit, in dem Interpolationstakt und/oder in dem Lageregeltakt.

Ein weiterer Gegenstand der Erfindung betrifft eine Werkzeugmaschine mit mindestens einer Achse sowie mit der Scannereinrichtung nach einem der vorhergehenden Ansprüche und/oder wie diese zuvor beschreiben wurde. Die Werkzeugmaschine weist eine Steuereinrichtung auf, wobei die Steuereinrichtung einen Interpolator umfasst, wobei der Interpolator die mindestens eine Achse und die erste und zweite virtuelle Schwenkachse der Scannereinrichtung interpolierend berechnet und ausgibt. Insbesondere setzt der Interpolator eine MehrachsInterpolation, wobei die Achsen der Mehrachsinterpolation die zwei virtuellen Schwenkachsen und die mindestens eine, einige oder Achsen der Werkzeugmaschine umfassen. Insbesondere ist vorgesehen, dass die Steuereinrichtung, insbesondere der Interpolator, in dem Interpolationstakt SOLL-Daten für die Scannereinrichtung und zudem SOLL-Achsdaten für die mindestens eine Achse ausgibt.

Ein weiterer Gegenstand der Erfindung betrifft ein Verfahren zum Betreiben der Scannereinrichtung, wie diese zuvor beschrieben wurde beziehungsweise nach einem der vorhergehenden Ansprüche, vorzugsweise mit einer Werkzeugmaschine, wie diese zuvor beschrieben wurde beziehungsweise nach einem der vorhergehenden Ansprüche. In dem Verfahren übernimmt die Scannereinrichtung insbesondere über die Schnittstelle die SOLL-Daten und bestimmt aus den SOLL-Daten den ersten und den zweiten SOLL-Spiegelschwenkwinkel. Dabei wird die mindestens eine Achse interpolierend mit der Scannereinrichtung, insbesondere mit den zwei virtuellen Schwenkachsen die der Scannereinrichtung zugeordnet sind, während der Positionierung und/oder während der Materialbearbeitung betrieben. Insbesondere ist vorgesehen, dass die SOLL-Daten und die SOLL-Achsdaten miteinander interpolierend von der Steuereinrichtung, insbesondere von dem Interpolator der Steuereinrichtung, erzeugt werden.

Die Interpolation der SOLL-Daten und der SOLL-Achsdaten kann während der Positionierung der Scannereinrichtung und/oder während der Bearbeitung eines Werkstücks mit dem Laserstrahl im Rahmen einer Lasermaterialbearbeitung durchgeführt werden. Beispielhaft ausgeführt, kann eine Bearbeitungsbahn auf einem Werkstück durch ein Zusammenwirken der Spiegelschwenkachsen der Scannereinrichtung und der mindestens einen Achse der Werkzeugmaschine umgesetzt werden, wobei die mindestens eine Achse und die zugrunde liegenden SOLL-Daten für die virtuellen Schwenkachsen interpolierend erzeugt wurden.

Bei einer bevorzugten Ausgestaltung des Verfahrens umfasst dieses einige oder alle nachfolgend beschriebenen Schritte, welche in der dargestellten Reihenfolge oder in einer beliebig möglichen Reihenfolge umgesetzt werden können:
In einem weiteren Schritt erfolgt durch das Kontrollmodul eine Berechnung des SOLL-Bearbeitungspunkts aus den SOLL-Daten. Vorzugsweise wird der SOLL-Bearbeitungspunkt in Bezug auf ein scannereinrichtungsfestes Koordinatensystem berechnet. Die Berechnung erfolgt unter Nutzung der SOLL-Daten zu dem virtuellen Werkzeug sowie der SOLL-Werkzeuglänge. Bei dieser und weiteren Berechnungen werden die bekannten, konstruktiven Gegebenheiten in der Scannereinrichtung z.B. im Rahmen eines Scannermodells oder im Rahmen von Einzeldaten verwendet. So sind beispielsweise die Position und Ausrichtung der virtuellen Schwenkachsen und der Spiegelschwenkachsen sowie die Position und Ausrichtung der Spiegel in dem Scannermodell abgelegt.

In einem weiteren Schritt erfolgt die Berechnung des ersten und des zweiten SOLL-Spiegelschwenkwinkels aus dem SOLL-Bearbeitungspunkt im Rahmen einer Rückwärtstransformation. Vorzugsweise wird in einem ersten Zwischenschritt der zweite SOLL-Spiegelschwenkwinkel und nachfolgend aus dem SOLL-Bearbeitungspunkt und dem ersten SOLL-Spiegelschwenkwinkel der zweite SOLL-Spiegelschwenkwinkel berechnet.

In einem weiteren Schritt erfolgt eine Berechnung der Strahlweglänge des Laserstrahls in der Scannereinrichtung auf Basis des ersten und des zweiten SOLL-Spiegelschwenkwinkels. Hierbei handelt es sich insbesondere um eine Vorwärtstransformation. Nachdem die Eingangslage des Laserstrahls sowie die SOLL-Spiegelschwenkwinkel und das Scannermodell bekannt sind, kann die Strahlweglänge in einfacher Weise bestimmt werden. Durch die Bestimmung der Strahlweglänge ist es möglich, in einem nachfolgenden Schritt die SOLL-Fokuslage zu berechnen. Die SOLL-Fokuslage ergibt sich in einfacher Weise aus dem Unterschied der Strahlweglänge bis zum Fokus des Laserstrahls und dem SOLL-Bearbeitungspunkt.

Es hat sich dabei als besonders vorteilhaft herausgestellt, die SOLL-Spiegelschwenkwinkel über ein Interpolationsverfahren zu berechnen. Durch das Interpolationsverfahren kann die Länge der Berechnungsvorgänge determiniert werden und die Berechnung in Echtzeit, in dem Lageregeltakt und/oder in dem Interpolationstakt die SOLL-Spiegelschwenkwinkel umgesetzt werden.

Nachfolgend werden die SOLL-Spiegelschwenkwinkel an die Spiegelmodule und optional ergänzend die SOLL-Fokuslage an das Optikmodul übermittelt, die die SOLL-Werte geregelt oder gesteuert in IST-Werte umsetzen.

Weitere Merkmale, Vorteile und Wirkungen der Erfindung ergeben sich aus der nachfolgenden Beschreibung eines bevorzugten Ausführungsbeispiels der Erfindung sowie den beigefügten Figuren. Dabei zeigen:
Figur 1 eine schematische Darstellung einer Werkzeugmaschine mit einem Werkzeug;
Figur 2 die Werkzeugmaschine in der Figur 1 mit einer Scannereinrichtung als ein Ausführungsbeispiel der Erfindung;
Figur 3 eine dreidimensionale Darstellung der Scannereinrichtung in der Figur 2;
Figur 4 ein Flussdiagramm zur Beschreibung der Bestimmung der Soll-Spiegelschwenkwinkel der Scannereinrichtung in der Figur 3 und 2.

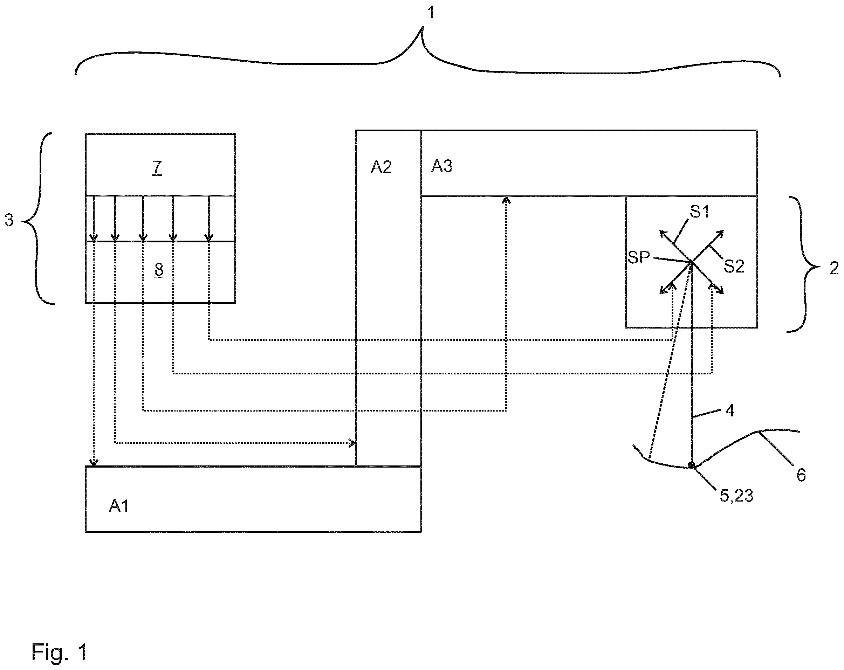

Die Figur 1 zeigt eine Werkzeugmaschine 1 mit einer Werkzeugeinrichtung 2. Die Werkzeugmaschine 1 weist in dem gezeigten Beispiel eine erste Achse A1, eine zweite Achse A2 und eine dritte Achse A3 auf. Die Achsen A1, A2 und A3 können als Linearachsen oder als Rotationsachsen ausgebildet sein. Es können sich auch mehr oder weniger Achsen in der Werkzeugmaschine 1 befinden.

Die Werkzeugeinrichtung 2 weist zwei Schwenkachsen S1 und S2 auf. Die Schwenkachsen S1 und S2 dienen dazu, ein Werkzeug 4 um einen Schwenkpunkt SP zu schwenken. Die Schwenkachsen S1 und S2 sind senkrecht zueinander angeordnet und treffen sich in dem Schwenkpunkt SP. Das Werkzeug 4 ist damit kardanisch in dem Schwenkpunkt SP befestigt. Das Werkzeug 4 weist eine Werkzeugspitze 5 auf, wobei der Abstand zwischen dem Schwenkpunkt SP und der Werkzeugspitze 5 als Werkzeuglänge bezeichnet wird.

Die Werkzeugmaschine 1 weist eine Steuereinrichtung 3 auf, welche ausgebildet ist, Achsen der Werkzeugmaschine 1 und der Werkzeugeinrichtung 2 anzusteuern. Durch das Zusammenspiel der Achsen A1, A2, A3, S1 und S2 kann mit der Werkzeugspitze 5 eine Bearbeitungsbahn 6 auf einem Werkstück (nicht gezeigt) abgefahren werden. Die Steuereinrichtung 3 ist ausgebildet, eine zum Beispiel einprogrammierte Bearbeitungsbahn 6 zu verarbeiten und die Achsen A1, A2, A3, S1 und S2 derart anzusteuern, dass die Werkzeugspitze 5 die Bearbeitungsbahn 6 abfährt. Zur Umsetzung weist die Steuereinrichtung 3 einen Interpolator 7 auf, welcher eine Mehrachsinterpolation, in diesem Fall eine Fünfachsinterpolation, durchführt. Als Ergebnis der Interpolation durch den Interpolator 7 werden zum einen SOLL-Achsdaten für die Achsen A1, A2 und A3 und zum anderen erste SOLL-Achsschwenkwinkel für die erste Schwenkachse S1 und zweite SOLL-Achsschwenkwinkel für die zweite Schwenkachse S2 ausgegeben. Die SOLL-Achsdaten und die SOLL-Achsschwenkwinkel werden in einen oder mehrere Lageregler 8 übergeben, die mittels einer Lageregelung die Achsen A1, A2, A3, S1 und S2 an die durch die SOLL-Achsdaten beziehungsweise SOLL-Achsschwenkwinkel definierten Positionen bringen.

Bei vielen Werkzeugmaschinen 1 ist die in dem Interpolator 7 durchgeführte Mehrachstransformation programmtechnisch gekapselt, sodass zwar unterschiedliche Ausführungen von Werkzeugmaschinen 1 gegebenenfalls mit Schwenkachsen S1 und S2 von Werkzeugeinrichtungen 2 angesteuert werden können, ein freier Zugriff auf die Mehrachsinterpolation ist jedoch schwierig oder nicht möglich.

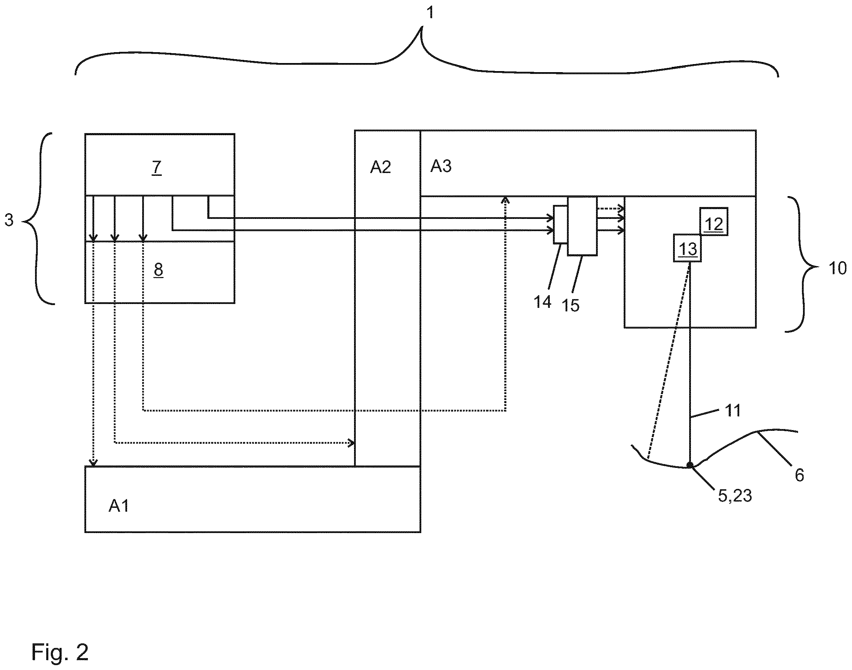

Die Figur 2 zeigt die Werkzeugmaschine 1 der vorhergehenden Figur, wobei jedoch statt der Werkzeugeinrichtung 2 eine Scannereinrichtung 10 an die Werkzeugmaschine 1 angesetzt ist. Die Scannereinrichtung 10 dient dazu, einen Laserstrahl 11, welcher für eine Lasermaterialbearbeitung, wie zum Beispiel Schweißen, Löten, Härten, etc. ausgebildet ist, ähnlich wie das Werkzeug 4 in der Figur 1 auszulenken.

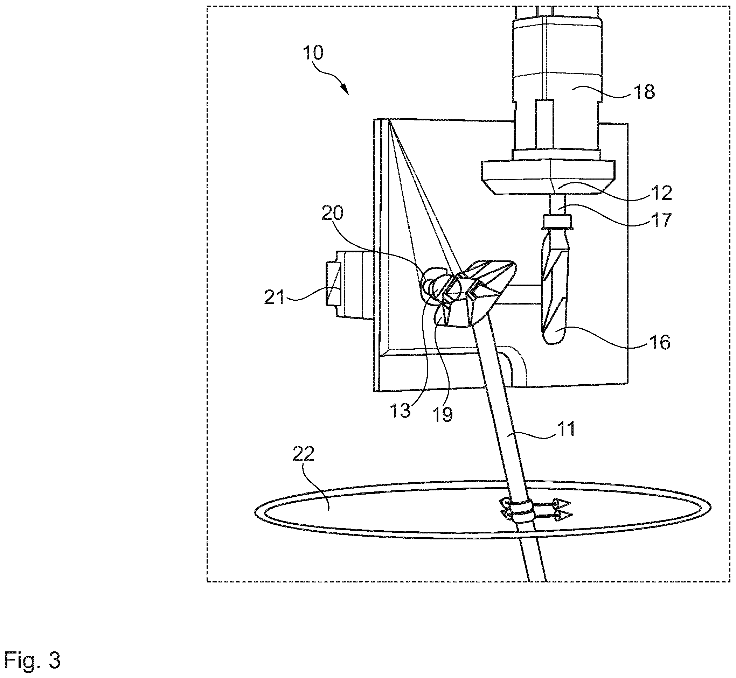

Die Scannereinrichtung 10 weist ein erstes Spiegelmodul 12 und ein zweites Spiegelmodul 13 auf, welche den Laserstrahl 11 in der Scannereinrichtung 10 führen und ablenken. Allerdings sind die Spiegelmodule 12, 13 derart angeordnet, dass diese den Laserstrahl 11 nicht kardanisch manipulieren können. Der genaue Aufbau der Scannereinrichtung 10 wird in der Figur 3 noch erläutert.

Die Steuereinrichtung 3 generiert mit dem Interpolator 7, wie in der Figur 1 bereits beschrieben, SOLL-Achsdaten für die drei Achsen A1, A2, A3 sowie einen ersten und einen zweiten SOLL-Achsschwenkwinkel für die Schwenkachsen S1 und S2 in der Figur 1. Nachdem die Werkzeugeinrichtung 2 in der Figur 2 nicht mehr an der Werkzeugmaschine 1 befestigt ist, wird nachfolgend die Werkzeugeinrichtung 2 und deren Komponenten als virtuelle Werkzeugeinrichtung 2, virtuelle Schwenkachsen S1 und S2, etc. bezeichnet.

Die Scannereinrichtung 10 weist eine Schnittstelle 14 auf, welche zur Übernahme der ersten und zweiten SOLL-Achsschwenkwinkel für die virtuellen Schwenkachsen S1 und S2 ausgebildet ist. Die Steuereinrichtung 3 generiert somit Steuerdaten für die nicht mehr angesetzte und damit virtuelle Werkzeugeinrichtung 2. Die Scannereinrichtung 10 weist ferner ein Kontrollmodul 15 auf, welches ausgebildet ist, auf Basis des ersten und des zweiten SOLL-Achsschwenkwinkels SOLL-Spiegelschwenkwinkel für das erste Spiegelmodul 12 und das zweite Spiegelmodul 13 zu bestimmen.

Die Figur 3 zeigt in einer schematischen dreidimensionalen Darstellung die Scannereinrichtung 10 der Figur 2. Die Scannereinrichtung 10 weist das erste Spiegelmodul 12 und das zweite Spiegelmodul 13 auf, ferner ist der Laserstrahl 11 gezeigt, wie dieser durch das erste und zweite Spiegelmodul 12, 13 entlang einer Strahlführung in der Scannereinrichtung 10 geführt ist.

Das erste Spiegelmodul 12 weist einen ersten Spiegel 16 und eine erste Spiegelschwenkachse 17 auf, welche mittels einer ersten Spiegelaktorik 18 geschwenkt werden kann. Das zweite Spiegelmodul 13 weist einen zweiten Spiegel 19 auf, welcher um eine zweite Spiegelschwenkachse 20 mittels einer zweiten Spiegelaktorik 21 geschwenkt werden kann. Die erste und die zweite Spiegelaktorik 18, 21 weisen jeweils einen Servomotor zur Schwenkung der Spiegel auf. Optional weisen die erste und die zweite Spiegelaktorik 18, 21 jeweils einen Lageregler zur Umsetzung der SOLL-Spiegelschwenkwinkel auf. Der Lageregler kann jedoch auch an einer anderen Position angeordnet sein.

Zum Zweck der Definition wird ein Koordinatensystem festgelegt, wobei eine Z-Achse durch die zweite Spiegelschwenkachse 20 festgelegt wird. Eine X-Achse befindet sich in einer Ebene senkrecht zu der Z-Achse und wird durch eine senkrechte Projektion des Laserstrahls 11 zwischen dem ersten Spiegel 16 und dem zweiten Spiegel 19 auf diese Ebene definiert. Die Y-Achse ist senkrecht zu der Z-Achse und zu der X-Achse ausgerichtet.

Der Laserstrahl 11 verläuft vor dem ersten Spiegel 16 parallel zu der Z-Achse und/oder zu der zweiten Spiegelschwenkachse 20. Die erste Spiegelschwenkachse 17 ist in Y-Richtung ausgerichtet. Somit wird der Laserstrahl 11 ausgehend von einer Z-Richtung nachfolgend in eine X-Richtung und nachfolgend in eine Y-Richtung abgelenkt. Die Schwenkung des ersten Spiegels 16 um die erste Spiegelschwenkachse 17 wird mit einem ersten Spiegelschwenkwinkel, die Schwenkung um die zweite Spiegelschwenkachse 20 des zweiten Spiegels 19 wird mit einem zweiten Spiegelschwenkwinkel bezeichnet. Nach dem zweiten Spiegel 19 wird der Laserstrahl 11 durch ein Schutzglas 22 geführt. Das Schutzglas 22 ist als eine planparallele Glasscheibe ausgebildet.

In dem Kontrollmodul 15 wird der erste SOLL-Achsschwenkwinkel für die erste virtuelle Schwenkachse S1 und der zweite SOLL-Achsschwenkwinkel für die zweite virtuelle Schwenkachse S2 in einen ersten SOLL-Spiegelschwenkwinkel für die erste Spiegelschwenkachse 17 und in einen zweiten SOLL-Spiegelschwenkwinkel für die zweite Spiegelschwenkachse 20 transformiert. Die Transformation erfolgt derart, dass der Laserstrahl 11 als reales Werkzeug der Scannereinrichtung 10 durch einen SOLL-Bearbeitungspunkt 23 (Figur 1) der Werkzeugspitze 5 des virtuellen Werkzeugs 4 geht.

Die Schnittstelle 14 und das Kontrollmodul 15 können, wie schematisch angedeutet, als ein separates Modul zu einem Gehäuse der ersten Scannereinrichtung 10 ausgebildet sein, diese können alternativ in dem Gehäuse der Scannereinrichtung 10 angeordnet sein. Es kann jedoch auch vorgesehen sein, dass die Schnittstelle 14 und das Kontrollmodul 15 in der Steuereinrichtung 3 integriert sind.

Die Bereitstellung der SOLL-Spiegelschwenkwinkel erfolgt derart in Echtzeit, dass die Bearbeitungsbahn 6 durch das Zusammenspiel der Achsen A1, A2 und A3 und der Spiegelmodule 12, 13 abgefahren werden kann, wobei die SOLL-Werte für alle Achsen auf der Ausgabe des Interpolators 7 der Steuereinrichtung 7 beruhen. Durch die Scannereinrichtung 10 wird es ermöglicht, ausgehend von SOLL-Achsdaten und SOLL-Achsschwenkwinkeln der Steuereinrichtung 3, die Spiegelmodule 12, 13 derart anzusteuern, dass die Bearbeitungsbahn 6 abgefahren werden kann.

Die Scannereinrichtung 10 weist zudem ein Optikmodul zur Fokuslagenänderung in Strahlrichtung des Laserstrahls 11 auf. Das Optikmodul ist in der Strahlführung vor dem ersten Spiegel 16 angeordnet und in diesem Beispiel als ein adaptives Teleskop ausgebildet. Das Optikmodul kann durch das Kontrollmodul 15 angesteuert werden, so dass von dem Kontrollmodul ein erster SOLL-Spiegelschwenkwinkel, ein zweiter SOLL-Spiegelschwenkwinkel und eine SOLL-Fokuslage ausgegeben wird.

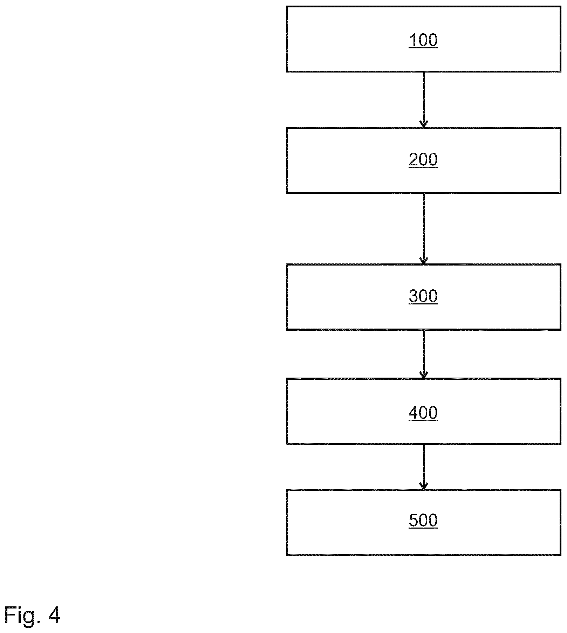

In der Figur 4 ist ein Flussdiagramm zur Berechnung des ersten und des zweiten SOLL-Spiegelschwenkwinkels dargestellt. In einem Schritt 100 wird auf Basis der SOLL-Achsschwenkwinkel für die virtuellen Schwenkachsen S1 und S2 sowie die Werkzeuglänge der SOLL-Bearbeitungspunkt 23 berechnet.

In einem Schritt 200 wird mittels einer Rückwärtstransformation und in Kenntnis der geometrischen Kenndaten und/oder eines Scannermodells der Scannereinrichtung 10 der zweite SOLL-Spiegelschwenkwinkel so bestimmt, dass der Laserstrahl 11 auf den Soll-Bearbeitungspunkt 23 geleitet wird.

In einem nachfolgenden Schritt 300 wird mittels einer zweiten Rückwärtstransformation der erste SOLL-Spiegelschwenkwinkel auf Basis des SOLL-Bearbeitungspunkts 23 sowie des ersten SOLL-Spiegelschwenkwinkels bestimmt. Die SOLL-Spiegelschwenkwinkel werden an die Spiegelmodule 12, 13 übergeben.

Mit diesem Vorgehen ist es möglich, den ersten und den zweiten SOLL-Spiegelschwenkwinkel derart zu bestimmen, dass der Laserstrahl 11 durch den SOLL-Bearbeitungspunkt 23 geführt wird. Allerdings ergibt sich durch die Änderung der Strahlweglänge des Laserstrahls 11 durch die Scannereinrichtung 10 aufgrund der unterschiedlichen Winkelstellungen der Spiegel 16, 19 eine Strahlweglängenänderung, die für eine exakte Bearbeitung kompensiert werden sollte. Die Kompensation der Änderung der Strahlweglänge erfolgt in den nachfolgenden Schritten. Je nach Qualitätsanforderungen an den Bearbeitungsprozess kann die Fokuslagenkorrektur entfallen und ist somit optional.

In einem Schritt 400 wird im Rahmen einer Vorwärtstransformation der Weg des Laserstrahls 11 durch die Scannereinrichtung 10 bestimmt.

In einem nachfolgenden Schritt 500 wird auf Basis der Vorwärtstransformation die Strahlweglänge berechnet und gegebenenfalls ein Korrekturwert SOLL-Fokuslage berechnet, welcher von dem Kontrollmodul 15 an das Optikmodul übergeben wird.

Die Berechnung der SOLL-Spiegelschwenkwinkel und optional ergänzend der SOLL-Fokuslage erfolgt in Echtzeit oder insbesondere innerhalb des Interpolationstaktes, der durch den Interpolator 7 vorgegeben ist.

### Bezugszeichenliste

- 1: Werkzeugmaschine
- 2: Werkzeug(einrichtung)
- 3: Steuereinrichtung
- 4: Werkzeug
- 5: Werkzeugspitze
- 6: Bearbeitungsbahn
- 7: Interpolator
- 8: Lageregler
- 9: leer
- 10: Scannereinrichtung
- 11: Laserstrahl
- 12: Spiegelmodul
- 13: Spiegelmodul
- 14: Schnittstelle
- 15: Kontrollmodul
- 16: Spiegel
- 17: Spiegelschwenkachse
- 18: Spiegelaktorik
- 19: Spiegel
- 20: Spiegelschwenkachse
- 21: Spiegelaktorik
- 22: Schutzglas
- 23: Bearbeitungspunkt
- A1, A2, A3: Achsen
- S1, S2: Schwenkachsen
- SP: Schwenkpunkt

## Patentansprüche

1. Scannereinrichtung (10) für einen Laserstrahl (11) zur Lasermaterialbearbeitung
mit einem ersten Spiegelmodul (12), wobei das erste Spiegelmodul (12) einen ersten Spiegel (16) und eine erste Spiegelaktorik (18) zum Schwenken des ersten Spiegels (16) relativ zu einer ersten Spiegelschwenkachse (17) um einen ersten Spiegelschwenkwinkel aufweist,
mit einem zweiten Spiegelmodul (13), wobei das zweite Spiegelmodul (13) einen zweiten Spiegel (19) und eine zweite Spiegelaktorik (21) zum Schwenken des zweiten Spiegels (19) relativ zu einer zweiten Spiegelschwenkachse (20) um einen zweiten Spiegelschwenkwinkel aufweist,
und wobei der erste und der zweite Spiegel (16,19) eine Strahlführung für den Laserstrahl (11) bilden, so dass der Laserstrahl (11) durch Veränderung des ersten und des zweiten Schwenkwinkels in zwei unabhängige Raumrichtungen abgelenkt werden kann,
mit einem Kontrollmodul (15) zur Vorgabe eines ersten SOLL-Spiegelschwenkwinkels und eines zweiten SOLL-Spiegelschwenkwinkels, mit einer Schnittstelle (14) zur Übernahme von SOLL-Daten,
**dadurch gekennzeichnet, dass** das Kontrollmodul (15) ausgebildet ist, aus den SOLL-Daten, welche einen ersten SOLL-Achsschwenkwinkel für eine erste virtuelle Schwenkachse (S1) und einen zweiten SOLL-Achsschwenkwinkel für eine zweite virtuelle Schwenkachse (S2) eines virtuellen Werkzeugs (4) umfassen, wobei sich die erste und die zweite virtuelle Schwenkachse (S1,S2) in einem virtuellen Schwenkpunkt (SP) kreuzen, wobei das virtuelle Werkzeug (4) eine Werkzeuglänge aufweist, so dass durch die SOLL-Daten ein SOLL-Bearbeitungspunkt (23) definiert ist, den ersten und den zweiten SOLL-Spiegelschwenkwinkel zu bestimmen, so dass der Laserstrahl (11) auf den SOLL-Bearbeitungspunkt (23) geführt ist.

2. Scannereinrichtung (10) nach Anspruch 1, **dadurch gekennzeichnet, dass** die Schnittstelle (14) zur Übernahme der SOLL-Daten und/oder des ersten und des zweiten SOLL-Achsschwenkwinkels und/oder dass das Kontrollmodul (15) zur Ausgabe des ersten und des zweiten SOLL-Spiegelschwenkwinkels in Echtzeit und/oder in einem Interpolationstakt und/oder in einem Lageregeltakt ausgebildet ist.

3. Scannereinrichtung (10) nach einem der vorhergehenden Ansprüche, **dadurch gekennzeichnet, dass** die erste Spiegelschwenkachse (17) und die zweite Spiegelschwenkachse (20) in einer Projektionsebene senkrecht zueinander ausgerichtet sind und dass die Strahlführung des Laserstrahls (11) bei dem Einfall auf den ersten Spiegel (16) parallel zu der zweiten Spiegelschwenkachse (20) ausgerichtet ist.

4. Scannereinrichtung (10) nach einem der vorhergehenden Ansprüche, **dadurch gekennzeichnet, dass** die Scannereinrichtung (10) ein Optikmodul zur Fokuslagenänderung aufweist, wobei das Kontrollmodul (15) zur Vorgabe einer SOLL-Fokuslage ausgebildet ist und wobei das Kontrollmodul (15) ausgebildet ist, aus den SOLL-Daten die SOLL-Fokuslage zu bestimmen.

5. Scannereinrichtung (10) nach Anspruch 4, **dadurch gekennzeichnet, dass** die SOLL-Daten eine SOLL-Werkzeuglänge umfassen.

6. Scannereinrichtung (10) nach einem der vorhergehenden Ansprüche, **dadurch gekennzeichnet, dass** das Kontrollmodul (15) ausgebildet ist, die SOLL-Spiegelschwenkwinkel und optional ergänzend die SOLL-Fokuslage aus einem Datenspeicher zu bestimmen.

7. Scannereinrichtung (10) nach einem der vorhergehenden Ansprüche 1 bis 5, **dadurch gekennzeichnet, dass** das Kontrollmodul (15) ausgebildet ist, die SOLL-Spiegelschwenkwinkel und optional ergänzend die SOLL-Fokuslage zu berechnen.

8. Werkzeugmaschine (1) mit mindestens einer Achse (A1, A2, A3) sowie mit der Scannereinrichtung (10) nach einem der vorhergehenden Ansprüche, **gekennzeichnet, durch** eine Steuereinrichtung (3), wobei die Steuereinrichtung (3) ausgebildet ist, die mindestens eine Achse (A1, A2, A3) und die Scannereinrichtung (10) interpolierend anzusteuern.

9. Werkzeugmaschine (1) nach Anspruch 8, **dadurch gekennzeichnet, dass** die Steuereinrichtung (3) in einem Interpolationstakt SOLL-Daten für die Scannereinrichtung (10) und zudem SOLL-Achsdaten für die mindestens eine Achse (A1, A2, A3) ausgibt.

10. Verfahren zum Betreiben der Scannereinrichtung (10) nach einem der Ansprüche 1 bis 7, vorzugsweise mit einer Werkzeugmaschine (1) nach einem der Ansprüche 8 oder 9, wobei die Scannereinrichtung (10) über die Schnittstelle (14) die SOLL-Daten übernimmt und aus den SOLL-Daten den ersten und den zweiten SOLL-Spiegelschwenkwinkel bestimmt.

11. Verfahren nach Anspruch 10, **dadurch gekennzeichnet, dass** die mindestens eine Achse (A1, A2, A3) der Werkzeugmaschine (1) interpolierend mit der Scannereinrichtung (10) während der Positionierung und/oder während der Bearbeitung betrieben wird.

12. Verfahren nach Anspruch 10 oder 11, **gekennzeichnet durch** die Schritte:
- Berechnung des SOLL-Bearbeitungspunkts aus den SOLL-Daten;
- Berechnung des zweiten SOLL-Spiegelschwenkwinkels aus dem SOLL-Bearbeitungspunkt;
- Berechnung des ersten SOLL-Spiegelschwenkwinkels aus dem SOLL-Bearbeitungspunkt und aus dem zweiten SOLL-Spiegelschwenkwinkel.

13. Verfahren nach Anspruch 12, **dadurch gekennzeichnet, dass** die Berechnung des ersten und/oder des zweiten SOLL-Spiegelschwenkwinkels mindestens eine Iterationsberechnung umfasst.

14. Verfahren nach Anspruch 12 oder 13, **gekennzeichnet durch** die weiteren Schritte:
- Berechnung der Strahlweglänge des Laserstrahls (11) in der Scannereinrichtung (10) aus dem ersten und dem zweiten SOLL-Spiegelschwenkwinkel;
- Berechnung der SOLL-Fokuslage aus der Strahlweglänge.

## Claims

1. A scanning device (10) for a laser beam (11) for laser material processing,
having a first mirror module (12), wherein the first mirror module (12) has a first mirror (16) and a first mirror actuator (18) for swiveling the first mirror (16) relative to a first mirror swivel axis (17) about a first mirror swivel angle,
having a second mirror module (13), wherein the second mirror module (13) has a second mirror (19) and a second mirror actuator (21) for swiveling the second mirror (19) relative to a second mirror swivel axis (20) about a second mirror swivel angle,
and wherein the first and the second mirror (16, 19) form a beam guidance for the laser beam (11), such that the laser beam (11) can be diverted into two independent spatial deflections by modifying the first and the second swivel angle,
having a control module (15) for predefining a first NOMINAL mirror swivel angle and a second NOMINAL mirror swivel angle,
having an interface (14) for adopting NOMINAL data,
**characterized in that**
the control module (15) is configured to determine the first and the second NOMINAL mirror swivel angle from the NOMINAL data, which comprise a first NOMINAL axis swivel angle for a first virtual swivel axis (S1) and a second NOMINAL axis swivel angle for a second virtual swivel axis (S2) of a virtual tool (4), wherein the first and the second virtual swivel axis (S1, S2) intersect at a virtual pivot point (SP), wherein the virtual tool (4) has a tool length so that a NOMINAL processing point (23) is defined by the NOMINAL data, such that the laser beam (11) is guided to the NOMINAL processing point (23).

2. The scanning device (10) according to Claim 1, **characterized in that** the interface (14) is configured to adopt the NOMINAL data and/or the first and the second NOMINAL axis swivel angle, and/or the control module (15) is configured to output the first and the second NOMINAL mirror swivel angle in real time and/or in an interpolation cycle and/or in a position control cycle.

3. The scanning device (10) according to any one of the preceding claims, **characterized in that** the first mirror swivel axis (17) and the second mirror swivel axis (20) are aligned vertical to one another in a projection plane, and the beam guidance of the laser beam (11), as it is incident on the first mirror (16), is aligned parallel to the second mirror swivel axis (20).

4. The scanning device (10) according to any one of the preceding claims, **characterized in that** the scanning device (10) has an optical module for changing the focal position, wherein the control module (15) is configured to predefine a NOMINAL focal position and wherein the control module (15) is configured to determine the NOMINAL focal position from the NOMINAL data.

5. The scanning device (10) according to Claim 4, **characterized in that** the NOMINAL data comprise a NOMINAL tool length.

6. The scanning device (10) according to any one of the preceding claims, **characterized in that** the control module (15) is configured to determine the NOMINAL mirror swivel angle, and optionally also the NOMINAL focal position, from a data memory.

7. The scanning device (10) according to any one of the preceding Claims 1 to 5, **characterized in that** the control module (15) is configured to calculate the NOMINAL mirror swivel angle, and optionally also the NOMINAL focal position.

8. A machine tool (1) having at least one axis (A1, A2, A3) as well as the scanning device (10) according to any one of the preceding claims, **characterized by** a control device (3), wherein the control device (3) is configured to control the at least one axis (A1, A2, A3) and the scanning device (10) in an interpolating manner.

9. The machine tool (1) according to Claim 8, **characterized in that** the control device (3) outputs NOMINAL data for the scanning device (10) in an interpolation cycle and, in addition, NOMINAL axis data for the at least one axis (A1, A2, A3).

10. A method for operating the scanning device (10) according to any one of Claims 1 to 7, preferably having a machine tool (1) according to any one of Claims 8 or 9, wherein the scanning device (10) adopts the NOMINAL data via the interface (14) and determines the first and the second NOMINAL mirror swivel angle from the NOMINAL data.

11. The method according to Claim 10, **characterized in that** the at least one axis (A1, A2, A3) of the machine tool (1) is operated in an interpolating manner with the scanning device (10) during the positioning and/or during the processing.

12. The method according to Claim 10 or 11, **characterized by** the steps:
- calculation of the NOMINAL processing point from the NOMINAL data;
- calculation of the second NOMINAL mirror swivel angle from the NOMINAL processing point;
- calculation of the first NOMINAL mirror swivel angle from the NOMINAL processing point and from the second NOMINAL mirror swivel angle.

13. The method according to Claim 12, **characterized in that** the calculation of the first and/or of the second NOMINAL mirror swivel angle comprises at least one iteration calculation.

14. The method according to Claim 12 or 13, **characterized by** the further steps:
- calculation of the beam path length of the laser beam (11) in the scanning device (10) from the first and the second NOMINAL mirror swivel angle;
- calculation of the NOMINAL focal position from the beam path length.

## Revendications

1. Équipement de scanner (10) pour un faisceau laser (11) pour l'usinage par laser
avec un premier module de miroir (12), le premier module de miroir (12) présentant un premier miroir (16) et un premier actionneur de miroir (18) pour le pivotement du premier miroir (16) par rapport à un premier axe de pivotement de miroir (17), d'un premier angle de pivotement de miroir,
avec un deuxième module de miroir (13), le deuxième module de miroir (13) présentant un deuxième miroir (19) et un deuxième actionneur de miroir (21) pour le pivotement du deuxième miroir (19) par rapport à un deuxième axe de pivotement de miroir (20), d'un deuxième angle de pivotement de miroir,
et les premier et deuxième miroirs (16, 19) formant un guide de faisceau pour le faisceau laser (11), de telle sorte que le faisceau laser (11) peut être dévié par la modification du premier et du deuxième angles de pivotement dans deux directions spatiales indépendantes, avec un module de commande (15) pour la spécification d'un premier angle de pivotement de miroir NOMINAL et d'un deuxième angle de pivotement de miroir NOMINAL, avec une interface (14) pour la reprise de données NOMINALES,
**caractérisé en ce que**
le module de commande (15) est formé pour déterminer les premier et deuxième angles de pivotement de miroir NOMINAUX de telle sorte que le faisceau laser (11) est guidé sur le point d'usinage NOMINAL (23), à partir des données NOMINALES, lesquelles comprennent un premier angle de pivotement d'axe NOMINAL pour un premier axe de pivotement virtuel (S1) et un deuxième angle de pivotement d'axe NOMINAL pour un deuxième axe de pivotement virtuel (S2) d'un outil virtuel (4), le premier et le deuxième axes de pivotement virtuels (S1, S2) s'intersectant en un point de pivotement virtuel (SP), l'outil virtuel (4) présentant une longueur d'outil, de telle sorte qu'un point d'usinage NOMINAL est défini par les données NOMINALES.

2. Équipement de scanner (10) selon la revendication 1, **caractérisé en ce que** l'interface (14) est formée pour la reprise des données NOMINALES et/ou du premier et du deuxième angles de pivotement d'axe NOMINAUX et/ou **en ce que** le module de commande (15) est formé pour la sortie du premier et du deuxième angles de pivotement de miroir NOMINAUX en temps réel et/ou dans une cadence d'interpolation et/ou dans une cadence de réglage de position.

3. Équipement de scanner (10) selon l'une des revendications précédentes, **caractérisé en ce que** le premier axe de pivotement de miroir (17) et le deuxième axe de pivotement de miroir (20) sont orientés verticalement l'un par rapport à l'autre dans un plan de projection, et **en ce que** le guide de faisceau du faisceau laser (11) est orienté parallèlement au deuxième axe de pivotement de miroir (20) lors de l'incidence sur le premier miroir (16).

4. Équipement de scanner (10) selon l'une des revendications précédentes, **caractérisé en ce que** l'équipement de scanner (10) présente un module optique pour la modification de position focale, le module de commande (15) étant formé pour la spécification d'une position focale NOMINALE, et le module de commande (15) étant formé pour déterminer la position focale NOMINALE à partir des données NOMINALES.

5. Équipement de scanner (10) selon la revendication 4, **caractérisé en ce que** les données NOMINALES comprennent une longueur d'outil NOMINALE.

6. Équipement de scanner (10) selon l'une des revendications précédentes, **caractérisé en ce que** le module de commande (15) est formé pour déterminer les angles de pivotement de miroir NOMINAUX et en option, de façon complémentaire, la position focale NOMINALE à partir d'une mémoire de données.

7. Équipement de scanner (10) selon l'une des revendications précédentes 1 à 5, **caractérisé en ce que** le module de commande (15) est formé pour calculer les angles de pivotement de miroir NOMINAL et en option, de façon complémentaire, la position focale NOMINALE.

8. Machine-outil (1) avec au moins un axe (A1, A2, A3) ainsi qu'avec l'équipement de scanner (10) selon l'une des revendications précédentes, **caractérisée par** un équipement de commande (3), l'équipement de commande (3) étant formé pour commander en interpolation l'au moins un axe (A1, A2, A3) et l'équipement de scanner (10).

9. Machine-outil (1) selon la revendication 8, **caractérisée en ce que** l'équipement de commande (3) sort des données NOMINALES pour l'équipement de scanner (10) et en outre des données d'axe NOMINALES pour l'au moins un axe (A1, A2, A3), à une cadence d'interpolation.

10. Procédé pour l'exploitation de l'équipement de scanner (10) selon l'une des revendications 1 à 7, de préférence avec une machine-outil (1) selon l'une des revendications 8 ou 9, l'équipement de scanner (10) reprenant les données NOMINALES par l'interface (14) et déterminant les premier et deuxième angles de pivotement de miroir à partir des données NOMINALES.

11. Procédé selon la revendication 10, **caractérisé en ce que** l'au moins un axe (A1, A2, A3) de la machine-outil (1) est exploité en interpolation avec l'équipement de scanner (10) pendant le positionnement et/ou pendant l'usinage.

12. Procédé selon la revendication 10 ou 11, **caractérisé par** les étapes :
- calcul du point d'usinage NOMINAL à partir des données NOMINALES ;
- calcul du deuxième angle de pivotement de miroir NOMINAL à partir du point d'usinage NOMINAL ;
- calcul du premier angle de pivotement de miroir NOMINAL à partir du point d'usinage NOMINAL et à partir du deuxième angle de pivotement de miroir NOMINAL.

13. Procédé selon la revendication 12, **caractérisé en ce que** le calcul du premier et/ou du deuxième angle(s) de pivotement de miroir NOMINAL/NOMINAUX comprend au moins un calcul par itération.

14. Procédé selon la revendication 12 ou 13, **caractérisé par** les étapes supplémentaires :
- calcul de la longueur de trajet de faisceau du faisceau laser (11) dans l'équipement de scanner (10) à partir des premier et deuxième angles de pivotement de miroir NOMINAUX ;
- calcul de la position focale NOMINALE à partir de la longueur de trajet de faisceau.
